# EUROPEAN PATENT SPECIFICATION

(11) **EP 1 410 929 B1**
(45) Date of publication and mention of the grant of the patent: **21.06.2006**
(21) Application number: 03023247.4
(22) Date of filing: 14.10.2003
(51) Int. Cl.: B60H 1/00, F28D 1/04

(54) **Heat exchanger**
Wärmetauscher
Echangeur de chaleur

(30) Priority: 15.10.2002 JP 2002300701
(43) Date of publication of application: 21.04.2004
(73) Proprietor: DENSO CORPORATION, Kariya-city, Aichi-pref. 448-8661 (JP)
(72) Inventor: Gocho, Kenta, Denso Corp. Int.Prop.Dept., Kariya-city, Aichi-pref., 448-8661 (JP); Kimata, Mitsuru, Denso Corp. Int.Prop.Dept., Kariya-city, Aichi-pref., 448-8661 (JP); Fukuoka, Mikio, Denso Corp. Int.Prop.Dept., Kariya-city, Aichi-pref., 448-8661 (JP)
(74) Representative: Klingseisen, Franz

(56) References cited:
- DE-A- 3 204 381
- DE-C- 4 313 567
- US-A- 4 559 994
- US-B1- 6 328 100
- PATENT ABSTRACTS OF JAPAN vol. 2002, no. 02, 2 April 2002 (2002-04-02) & JP 2001 294029 A (DENSO CORP), 23 October 2001 (2001-10-23)

## Description

The present invention relates to a heat exchanger suitable for use in a vehicular heat exchanger such as a heater core, which heats air to be blown into a passenger compartment. More particularly, the present invention relates to a heat exchanger suitable for being mounted in a vehicular right/left temperature independent control-type air conditioning unit, which independently controls temperatures of a left-seat air conditioning region and a right-seat air conditioning region of the passenger compartment.

For example, JP-A-2001-294029 discloses a heat exchanger for a right/left temperature independent control-type air conditioning unit. A core body of the heat exchanger is constructed of a plurality of tubes. The tubes are arranged in a right and left direction and are divided into a first core portion and a second core portion from a middle position. Further, in the first core portion and the second core portion, the tubes are respectively arranged in two rows with respect to an air flow direction.

Hot water from an engine, which is a heat source for air, flows into tubes in the first rows of the first core portion and the second core portion, respectively. The hot water changes a flow direction in a tank, which is connected to ends of the tubes on a side opposite to the inlet side of the tubes. The hot water then flows into the tubes in the second rows of the first core portion and the second core portion. While passing through the tubes, the hot water heats air.

In the above heat exchanger, however, in a case that the flow rate of the hot water is very low, the hot water radiates heat in the proximity of the inlet portions of the tubes of the first and the second core portions. Thus, temperature of air, which is heated by the hot water, on the side opposite to the inlet portions of the tubes is generally lower than that of the inlet portions. That is, the temperature of the heated air varies with respect to the longitudinal direction of the tubes. When the air having low temperature is blown into the passenger compartment, it results in an insufficient heating condition.

Further, U.S. patent No. 4,559,994 discloses a heat exchanger comprising the features of the preamble of claim 1, the heat exchanger being constructed such that the inside fluid flows in the tubes from the middle portion of the upper tank, changes flow direction once in the lower tank, and finally reaches end portion of the upper tank to be discharged from the upper tank.

The present invention is made in view of the above-mentioned disadvantage, and it is an object of the present invention to provide a heat exchanger capable of better reducing temperature variations of an outside fluid with respect to longitudinal directions of the tubes even if the flow rate of an inside fluid is very low.

According to the present invention, a heat exchanger includes a plurality of tubes through which an inside fluid flows, a first (upper) tank, a second (lower) tank, and a plurality of separation wallsin each of the first and second tanks. The tubes are arranged in a direction that intersects with longitudinal directions of the tubes. The first tank and the second tank are connected to longitudinal ends of the tubes for making communication with the tubes, wherein the first and second tanks extend in directions that the tubes are arranged. The separation walls are disposed so that a passage of the inside fluid is formed such that the inside fluid enters the tubes from both ends of the second tank, changes flow direction in the first tank, then changes flow direction in the second tank, and finally reaches a middle portion of the first tank to be discharged.

Accordingly, in the circulation of the inside fluid, the end tubes, which are arranged adjacent to the longitudinal ends of the first tank and the second tank, are filled first with the inside fluid having high temperature. Therefore, even if the flow rate of the inside fluid is very low, it is less likely that the temperature variations of the outside fluid will occur in the longitudinal directions of the tubes.

Moreover, the inside fluid entering from both ends of the second (lower) tank causes maintaining or increasing temperature of an outside fluid that is introduced to the foot air blow port, and the inside fluid being discharged from the first (upper) tank prevents air bubbles from being trapped inside thereby preventing performance deterioration due to trapped air bubbles and resultant noises.

Other objects, features and advantages of the present invention will become more apparent from the following detailed description made with reference to the accompanying drawings, in which like parts are designated by like reference numbers and in which:
Fig. 1 is a cross-sectional view of a heater core according to the first embodiment of the present invention;
Fig. 2 is a cross-sectional view of a tank of the heater core taken along line II-II in Fig. 1;
Fig. 3 is a cross-sectional view of a heater core according to a second embodiment not included in the claims;
Fig. 4 is a cross-sectional view of a heater core according to the third embodiment of the present invention;
Fig. 5 is a cross-sectional view of a tank of the heater core taken along line V-V in Fig. 4;
Fig. 6 is a cross-sectional view of a heater core according to the fourth embodiment of the present invention;
Fig. 7 is a cross-sectional view of a tank of the heater core taken along line VII-VII in Fig. 6; and
Fig. 8 is a cross-sectional view of the heater core taken along line VIII-VIII in Fig. 6.

Embodiments of the present invention will be described hereinafter with reference to the drawings.

### [First Embodiment]

The heat exchanger of the present invention is used for a heater core 100 in the first embodiment. More specifically, the heater core 100 is mounted in a vehicular right/left temperature independent control-type air conditioning unit, which is capable of independently controlling temperatures of right region and left region of a passenger compartment.

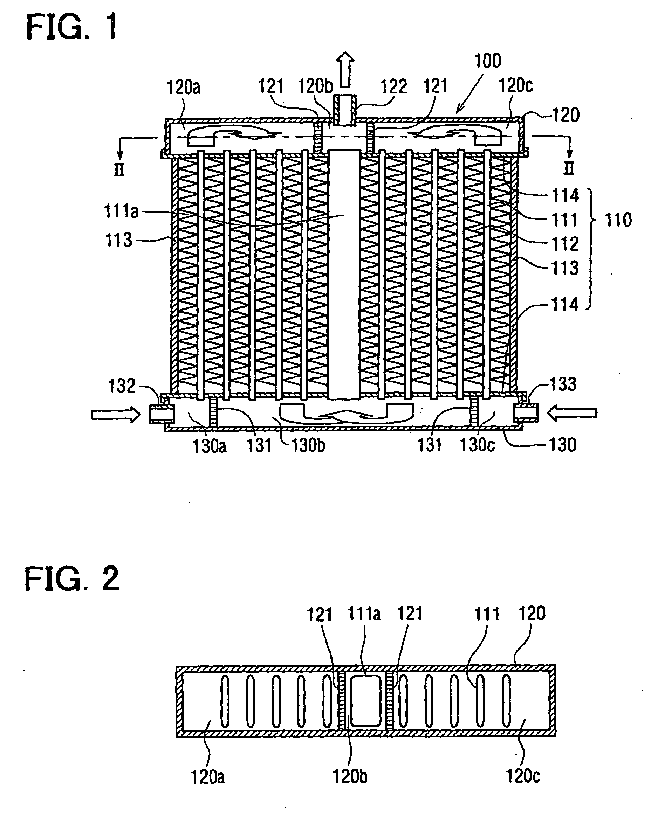

The heater core 100 is installed in an air conditioning unit (not shown). As shown in Figs. 1 and 2, the heater core 100 is generally placed such that tubes 111 extend substantially in an up and down direction and are arranged in a right and left direction. Here, an upper portion of the air conditioning unit is connected to a defroster air blow port of the passenger compartment through a duct . A lower portion of the air conditioning unit is connected to a foot air blow port of the passenger compartment through a duct. Thus, the air heated by passing through the upper portion of the heater core 100 is generally introduced to the defroster air blow port and the air heated by passing through the lower portion of the heater core 100 is generally introduced to the foot air blow port.

The heater core 100 is mainly constructed of a core portion 110, an upper tank 120, a lower tank 130 and the like. Here, component parts constructing the above members 110, 120, 130 are made of a material such as aluminum or aluminum alloy. The component parts are assembled such as by engaging or clamping, or by using jigs. Brazing materials are previously applied on surfaces of the component parts. After assembled, the component parts are integrally brazed by the brazing materials.

The core portion 110 is constructed of the tubes 111, a central tube 111a, fins 112, side plates 113, and core plates 114. The tubes 111 are flat and have substantially elliptic-shaped cross-sections. The tubes 111 are arranged in a direction intersecting with the longitudinal directions of the tubes 111. The central tube 111a is arranged in a middle position of the tubes 111. The central tube 111a has a flow area that is greater than that of the tubes 111. In the embodiment, for example, the flow area of the central tube 111a is approximately four times larger than that of each tube 111. Hereinafter, the longitudinal direction of the tubes 111 and the arranging directions of the tubes 111 are respectively referred to as the up and down direction and the right and left direction in correspondence with the position that the heater core 100 is actually arranged in the air conditioning unit.

The fins 112 have wave forms and are formed from thin band plates. The fins 112 are interposed between the tubes 111 and the central tube 111a to increase a heat radiating surface area. The side plates 113, as reinforcing members, are provided on the outer faces of the most outside fins 112 in the right and left direction.

Each of the core plates 114 has a flange on its periphery and forms a plurality of tube holes on its flat portion. The core plates 114 are connected to the longitudinal ends of the tubes 111 and the central tube 111a. The longitudinal ends of the tubes 111 and the central tube 111a are fitted into and brazed with the tube holes. The longitudinal ends of the side plates 113 are brazed with the flat portions of the core plates 114.

The upper tank 120 and the lower tank 130 are in forms of containers having rectangular parallelepiped external forms. The upper tank 120 and the lower tank 130 have opening portions on the sides of the core plates 114. Thus, the upper tank 120 and the lower tank 130 are respectively brazed with the core plates 114 such that the opening portions are fitted to the flanges of the core plates 114.

In the upper tank 120, two separation walls 121 are provided. The separation walls 121 are respectively arranged adjacent to a right side and a left side of the central tube 111a so that the inside of the upper tank 120 is divided into a left upper tank portion 120a, a central upper tank portion 120b, and a right upper tank portion 120c.

Further, an outlet pipe 122 is provided on a ceiling portion of the central upper tank portion 120b, which is defined between the separation walls 121. The left upper tank portion 120a communicates with left tubes 111 that are arranged on the left side of the central tube 111a. The right upper tank portion 120c communicates with right tubes 111 that are arranged on the right side of the central tube 111a. Also, the central upper tank portion 120b communicates with the central tube 111a and the outlet pipe 122.

In the lower tank 130, separation walls 131 are provided adjacent to the longitudinal ends of the lower tank 130. The inside of the lower tank 130 is divided into a left lower tank portion 130a, a middle lower tank portion 130b, and a right lower tank portion 130c by the separation walls 131. A first inlet pipe 132 and a second inlet pipe 133 are provided at the longitudinal ends of the lower tank 130, that is, connected to the left lower tank portion 130a and the right lower tank portion 130c, respectively. Further, the left lower tank portion 130a communicates with the left end tube 111, and the right lower tank portion 130c communicates with the right end tube 111. Also, the middle lower tank portion 130b communicates with the remaining tubes 111 and the central tube 111a.

In the heater core 100 constructed as described above, an inside fluid such as hot water from an engine (not shown) first flows into the left and right lower tank portions 130a, 130c through the first and second inlet pipes 132, 133. Next, the hot water flows through the left end tube 111 and the right end tube 111 upward and changes flow direction in the left and right upper tank portions 120a, 120c. Then, the hot water flows downward through the tubes 111 other than the left end tube and the right end tube toward the lower tank 130. Further, the hot water changes the flow direction in the middle lower tank portion 130b and flows upward through the central tube 111a. The hot water reaches the central upper tank portion 120b and flows out from the outlet pipe 122. During the circulation of the hot water, an outside fluid (for example, air) passing through the core portion 111 is heated by the heat of the hot water.

Accordingly, in the circulation of the hot water, the left and right end tubes 111 are filled first with hot water having high-temperature . Therefore, even if the flow rate of the hot water is very low, it is less likely that the temperature variations of the air with respect to the longitudinal directions of the tubes 111 will occur. Further, this satisfies heating conditions of air introduced to the defroster air blow port and the foot air blow port.

Also, the central tube 111a the flow area of which is greater than the other tubes 111 is provided in the middle of the core portion 110. Therefore, the hot water passage through which the hot water after the last turning flows is provided within a small region with respect to the arranging direction of the tubes 111. With this, flexibility for forming U-turning and reciprocating flows improves upstream of the central tube 111a and thereby to easily control the temperature variations in the up and down direction. In other words, it is possible to increase the number of the intermediate tubes 111 through which the hot water having reversed the flow direction once in the upper tank 120 flows downward. By this, a region where the temperature is relatively high is formed on the upper portion of the tubes 111. Accordingly, this region is provided as a region for controlling the temperature with the lower portion where the temperature of the air is highest.

### [Second embodiment]

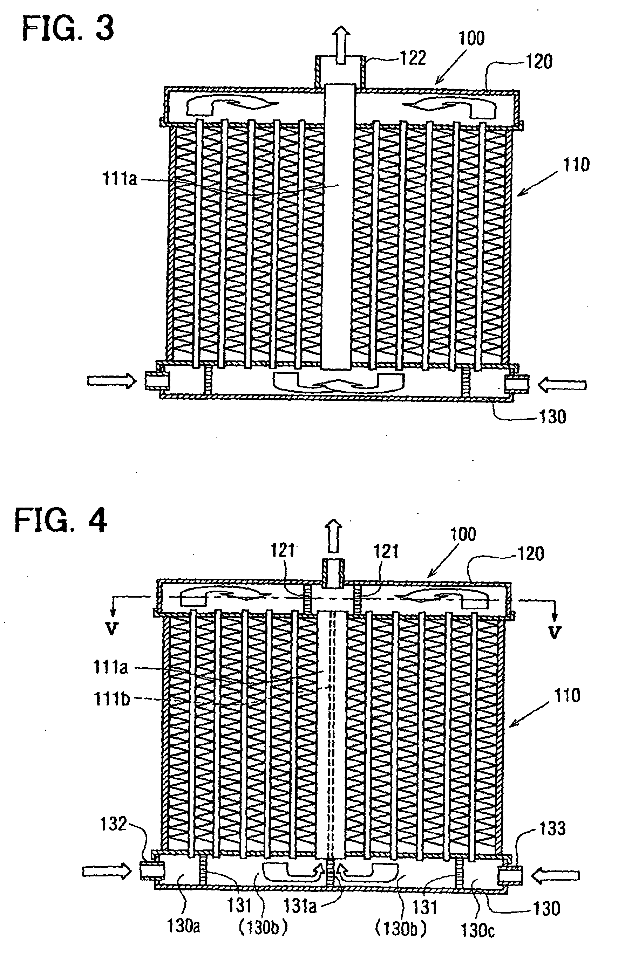

A second embodiment is shown in Fig. 3. In the second embodiment, as compared with the first embodiment, the central tube 111a and the upper tank 120 are brazed and therefore the separation walls 121 are not provided.

The downstream end (top end in Fig. 3) of the central tube 111a through which the hot water after the last turning flows extends such that it passes through the ceiling portion of the upper tank 120. The central tube 111a is brazed with the upper tank 120 at the passing portion. The outlet pipe 122 is disposed such that it encompasses the end of the central tube 111a.

Accordingly, in the upper tank 120, the wall of the central tube 111a functions as the separation walls 121, which is provided in the upper tank 120 in the first embodiment. Therefore, it is possible to eliminate the separation walls 121 from the first embodiment. Also in the second embodiment, advantages similar to the first embodiments are provided.

### [Third embodiment]

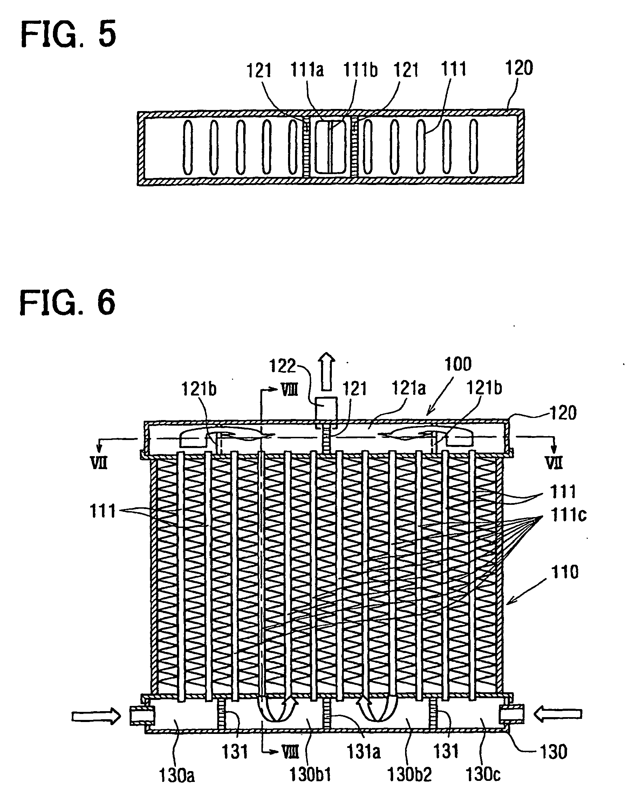

The third embodiment of the present invention is shown in Figs. 4 and 5. In the third embodiment, compared with the first embodiment, the flow of the hot water from the first and the second inlet pipes 132, 133 is completely separated.

Here, a central separation wall 131a is provided in the middle of the middle lower tank portion 130b. The central separation wall 131a divides the middle lower tank portion 130b into the left portion and the right portion from the middle position. Further, in the central tube 111a, a tube inside separation wall 111b is provided to correspond to the central separation wall 131a.

By the central separation wall 131a and the tube inside separation wall 111b, the hot water flowing in the left tubes 111 from the left lower tank portion 130a and the hot water flowing in the right tubes 111 from the right lower tank portion 130c do not mix, even after the last turnings at the middle lower tank portion 130b. Accordingly, it is possible to independently control temperatures of the air passing through the left region and the right region of the core portion 110.

### [Fourth embodiment]

The fourth embodiment of the present invention is shown in Figs 6 through 8. In the fourth embodiment, compared with the first embodiment, positions of the separations walls 121, 131 are different and the central tube 111a is not provided.

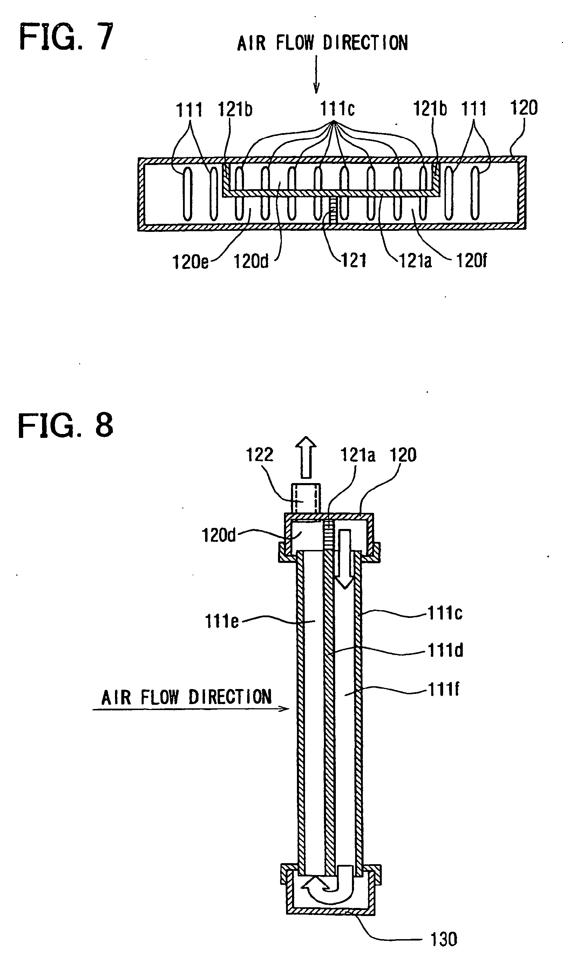

In the middle portion of the upper tank 120, a separation wall 121a, which has substantially a U-shape when viewed from the top, is provided. By the U-shaped separation wall 121a, the inside of the upper tank 120 is divided into two spaces in the air f low direction . Further, the separation wall 121 is provided in the upper tank 120 on a side opposite to the open portion of the U-shaped separation wall 121a, as shown in Fig. 7. Therefore, the upper tank 120 is divided into a first tank portion 120d, which is in the inside of the U-shaped separation wall 121, a second tank portion 120e and a third tank portion 120f that are the outside of the first tank portion 120d.

In addition, as shown in Fig. 8, dividing walls 111d are provided in intermediate tubes 111c that communicate with the first tank portion 120d, at positions corresponding to the position of the U-shaped separation wall 121a. By this, the inside of the each intermediate tube 111c is divided into a first passage 111e on an air upstream side of the dividing wall 111d and a second passage 111f on an air downstream side. In the fourth embodiment, for example, eight intermediate tubes 111 have partition walls 111d and the first passages 111e of the eight intermediate tubes 111 communicate with the first tank portion 120d. That is, a total opening area (1/2 x 8) of the intermediate tubes 111c opening to the first tank portion 120d is substantially the same as the total opening area of four tubes 111. Therefore, the total opening area of the fourth embodiment is the same as the flow area of the central tube 111a of the first embodiment. The outlet pipe 122 is disposed to communicate with the first tank portion 120d.

In the lower tank 130, on the other hand, the separation walls 131 are provided adjacent to the left and right ends to correspond to the right and left end portion 121b of the U-shaped separation wall 121a. Also, a central separation wall 131a is provided in the middle of the lower tank 130. Thus, the lower tank 130 is divided into a left lower tank portion 130a, a left middle lower tank portion 130b1, a right middle lower tank portion 130b2, and a right lower tank portion 130c.

Accordingly, the hot water first flows from the first and second inlet pipes 132, 133 into the left and right lower tank portions 130a, 130c of the lower tank 130. Then, the hot water flows upward in the left and right end tubes 111 and flows into the second and third tank portions 120e, 120f of the upper tank 120. Then, the hot water flows into the second passages 111f of the intermediate tubes 111c, which are formed on the air downstream sides of the tube inside separation walls 111d, and flows downward to the left middle lower tank portion 130b1 and the right lower tank portion 130b2 of the lower tank portion 130. The hot water changes the flow direction in the left middle lower tank portion 130b1 and the right middle lower tank portion 130b2 and flows into the first passages 111e of the intermediate tubes 111c. At this time the hot water in the left middle lower tank portion 130b1 and the right lower tank portion 130b2 are separated by the central separation wall 131a. Then, the hot water reaches the first tank portion 120d and exits from the outlet pipe 122.

By this, it is possible to increase the number of the intermediate tubes 111c that define the passages through which the hot water after the last turning flows. Further, the flow passages that corresponds to the central tube 111a of the first to the third embodiments can be provided by the first passages 111e of the intermediate tubes 111c. Therefore, the central tube 111a, which has a special size, is not required in the fourth embodiment. Also in the fourth embodiment, advantages similar to the first to the third embodiments can be provided. Here, the heater core can be used such that the air flow direction is opposite to the air flow direction shown in Figs. 7 and 8.

### [Other embodiments]

The central tube 111a of the first to third embodiments can be replaced into the plurality of tubes 111. Also, the outlet pipe 122 can be provided to the lower tank 130 for adjusting the number of the turnings of the hot water flow. That is, the inlet pipes 131, 132 and the outlet pipe 122 can be provided in the same tank so that the inside fluid flowing in the tubes 111 from one of the tanks returns to the middle portion of the same tank. The materials of the component parts constructing the heater core 100 is not limited to aluminum. The component parts can be made of another material such as copper.

Further, the present invention is not limited to use in the heater core 100. The present invention can be employed to a heat exchanger for cooling such as an evaporator of a vehicular air conditioning unit. In this case, the inside fluid is a refrigerant. Furthermore, the arranging position or direction of the heater core 100 is not limited to the above-described position.

The present invention should not be limited to the disclosed embodiments, but may be implemented in other ways without departing from invention as claimed.

## Claims

1. A heat exchanger (100) for performing heat exchange between an inside fluid and an outside fluid, the heat exchanger (100) including:
a plurality of tubes (111) through which the inside fluid flows, wherein the tubes (111) are arranged in a direction intersecting with longitudinal directions of the tubes (111); and
a first tank (120) and a second tank (130) connected to longitudinal ends of the tubes (111) for making communication with the tubes (111), wherein the first tank and the second tank are disposed to extend in directions that the tubes (111) are arranged, wherein the first tank is disposed over the of tubes while the second tank is disposed under the plurality of tubes,
the heat exchanger **characterized by** comprising:
a plurality of separation walls (121, 131) provided in each of the first tank and the second tank,
wherein the separation walls (121, 131) are disposed so that a passage of the inside fluid is formed such that the inside fluid flows in the tubes (111) from each of ends of the second tank, changes flow direction in the first tank and then in the second tank, and finally reaches a middle portion of the first tank to be discharged from the first tank.

2. The heat exchanger (100) according to claim 1,
wherein a tube (111a) that is located in a central position within the plurality of tubes (111) has a flow area larger than that of the remaining tubes (111).

3. The heat exchanger (100) according to claim 2,
wherein the central tube (111a) is disposed such that its downstream end passes through the first tank and is brazed with the first tank.

4. The heat exchanger (100) according to claim 2 or 3,
wherein the second tank at which the inside fluid changes the flow direction last includes a central separation wall (131a) at its central position with respect to the longitudinal direction, and
wherein the central tube (111a) includes a tube inside separation wall (111b) to correspond to the central separation wall (131a).

5. The heat exchanger (100) according to claim 1, further comprising:
a tank dividing wall (111d) for dividing an inside of the first tank into a first portion (120d) and a second portion with respect to a direction that the outside fluid flows; and
tube dividing walls (121a) provided in intermediate tubes (111) at least other than the tubes that are arranged at the ends for dividing the respective intermediate tubes (111) into first passages (111e) and second passages (111f) with respect to the flow direction of the outside fluid,
wherein when the inside fluid changes the flow direction last, the inside fluid flows from the second passages (111f) into the first passages (111e).

6. The heat exchanger (100) according to claim 5,
wherein the first passages (111e) communicate with the first portion (120d) of the first tank.

7. The heat exchanger (100) according to claim 1 or 5,
wherein the second tank at which the inside fluid changes the flow direction last includes a central separation wall (131a), and the central separation wall (131a) is disposed at a middle position for dividing the second tank with respect to the longitudinal direction.

8. The heat exchanger (100) according to any one of claims 1 through 7,
wherein the outside fluid is air and is heated by the inside fluid while passing between the tubes (111).

9. An air conditioner for a vehicle having a heat exchanger (100) according to any one of claims 1 through 8,
wherein the heat exchanger (100) is installed such that the tubes (111) are arranged in a right and left direction of the vehicle so that the outside fluid passing through a left half region of the heat exchanger (10) exchanges heat with the inside fluid passing in the left half tubes (111), and the outside fluid passing through a right half region of the heat exchanger (100) exchanges heat with the inside fluid passing in the right half tubes (111).

## Patentansprüche

1. Wärmetauscher (100) zum Durchführen eines Wärmeaustausches zwischen einem inneren Fluid und einem äußeren Fluid, wobei der Wärmetauscher (100) enthält: mehrere Rohre (111), durch welche das innere Fluid strömt, wobei die Rohre (111) in einer die Längsrichtungen der Rohre (111) schneidenden Richtung angeordnet sind; und
einen ersten Behälter (120) und einen zweiten Behälter (130), die mit Längsenden der Rohre (111) zum Herstellen einer Verbindung mit den Rohren (111) verbunden sind, wobei der erste Behälter und der zweite Behälter so angeordnet sind, dass sie sich in Richtungen erstrecken, in denen die Rohre (111) angeordnet sind,
wobei der erste Behälter über den mehreren Rohren angeordnet ist, während der zweite Behälter unter den mehreren Rohren angeordnet ist,
wobei der Wärmetauscher **gekennzeichnet ist durch**
mehrere Trennwände (121, 131), die in jedem des ersten Behälters und des zweiten Behälters vorgesehen sind,
wobei die Trennwände (121, 131) so angeordnet sind, dass ein Kanal des inneren Fluids derart gebildet ist, dass das innere Fluid in den Rohren (111) von jedem Ende des zweiten Behälters in die Rohre (111) strömt, die Strömungsrichtung im ersten Behälter und dann im zweiten Behälter wechselt, und schließlich einen Mittelabschnitt des ersten Behälters erreicht, um aus dem ersten Behälter ausgegeben zu werden.

2. Wärmetauscher (100) nach Anspruch 1,
bei welchem ein Rohr (111a), das in einer mittleren Position in den mehreren Rohren (111) positioniert ist, einen größeren Strömungsbereich als die übrigen Rohre (111) besitzt.

3. Wärmetauscher (100) nach Anspruch 2,
bei welchem das mittlere Rohr (111a) derart angeordnet ist, dass sein stromabwärtiges Ende durch den ersten Behälter läuft und mit dem ersten Behälter verlötet ist.

4. Wärmetauscher (100) nach Anspruch 2 oder 3,
bei welchem der zweite Behälter, bei dem das innere Fluid die Strömungsrichtung zuletzt ändert, eine mittlere Trennwand (131a) an seiner mittleren Position bezüglich der Längsrichtung enthält, und
bei welchem das mittlere Rohr (111) eine Rohrinnentrennwand (111b) entsprechend der mittleren Trennwand (131a) enthält.

5. Wärmetauscher (100) nach Anspruch 1, ferner mit
einer Behälterteilungswand (111d) zum Teilen eines Innern eines ersten Behälters in einen ersten Abschnitt (120d) und einen zweiten Abschnitt bezüglich einer Richtung, in der das äußere Fluid strömt; und
Rohrteilungswänden (121a), die in Zwischenrohren (111) wenigstens außer den Rohren, die an den Enden angeordnet sind, vorgesehen sind, zum Teilen der jeweiligen Zwischenrohre (111) in erste Kanäle (111e) und zweite Kanäle (111f) bezüglich der Strömungsrichtung des äußeren Fluids,
wobei, wenn das innere Fluid die Strömungsrichtung zuletzt ändert, das innere Fluid von den zweiten Kanälen (111f) in die ersten Kanäle (111e) strömt.

6. Wärmetauscher (100) nach Anspruch 5,
bei welchem die ersten Kanäle (111e) mit dem ersten Abschnitt (120d) des ersten Behälters in Verbindung stehen.

7. Wärmetauscher (100) nach Anspruch 1 oder 5,
bei welchem der zweite Behälter, bei welchem das innere Fluid die Strömungsrichtung zuletzt ändert, eine mittlere Trennwand (131a) enthält und die mittlere Trennwand (131a) an einer Mittelposition zum Teilen des zweiten Behälters bezüglich der Längsrichtung angeordnet ist.

8. Wärmetauscher (100) nach einem der Ansprüche 1 bis 7,
bei welchem das äußere Fluid Luft ist und durch das innere Fluid während des Strömens zwischen den Rohren (111) erwärmt wird.

9. Klimaanlage für ein Fahrzeug mit einem Wärmetauscher (100) nach einem der Ansprüche 1 bis 8,
bei welcher der Wärmetauscher (100) derart eingebaut ist, dass die Rohre (111) in einer Rechts/Links-Richtung des Fahrzeugs angeordnet sind, sodass das durch eine linke Hälfte des Wärmetauschers (10) strömende äußere Fluid mit dem in den Rohren (111) der linken Hälfte strömenden inneren Fluid in Wärmeaustausch steht und das durch eine rechte Hälfte des Wärmetauschers (100) strömende äußere Fluid mit dem in den Rohren (111) der rechten Hälfte strömenden inneren Fluid in Wärmeaustausch steht.

## Revendications

1. Echangeur de chaleur (100) pour effectuer l'échange de chaleur entre un fluide intérieur et un fluide extérieur, l'échangeur de chaleur (100) incluant :
une pluralité de tubes (111) à travers lesquels le fluide intérieur s'écoule, dans lequel les tubes (111) sont agencés dans une direction s'intersectant avec les directions longitudinales des tubes (111) ; et
un premier réservoir (120) et un second réservoir (130) raccordés aux extrémités longitudinales des tubes (111) pour établir la communication avec les tubes (111), dans lequel le premier réservoir et second réservoir sont disposés pour s'étendre dans des directions où les tubes (111) sont agencés, dans lequel le premier réservoir est disposé sur la pluralité de tubes tandis que le second réservoir est disposé sous la pluralité de tubes ;
l'échangeur de chaleur étant **caractérisé en ce qu'**il comprend :
une pluralité de parois de séparation (121, 131) disposées dans chacun du premier réservoir et du second réservoir,
dans lequel les parois de séparation (121, 131) sont disposées de sorte qu'un passage du fluide intérieur est formé de sorte que le fluide intérieur s'écoule dans les tubes (111) depuis chacune des extrémités du second réservoir, change la direction de l'écoulement dans le premier réservoir et ensuite dans le second réservoir et atteint finalement une partie du milieu du premier réservoir pour être déchargé du premier réservoir.

2. Echangeur de chaleur (100) selon la revendication 1,
dans lequel un tube (111a) qui est placé à une position centrale à l'intérieur de la pluralité de tubes (111) présente une surface d'écoulement plus grande que celle du tube restant (111).

3. Echangeur de chaleur (100) selon la revendication 2,
dans lequel le tube central (111a) est disposé de sorte que son extrémité en aval passe à travers le premier réservoir et est brasé au premier réservoir.

4. Echangeur de chaleur (100) selon la revendication 2 ou 3,
dans lequel le second réservoir au niveau duquel le fluide intérieur change la direction de l'écoulement en dernier inclut une paroi de séparation centrale (131a) au niveau de sa position centrale par rapport à la direction longitudinale, et
dans lequel le tube central (111a) inclut une paroi de séparation à l'intérieur du tube (111b) pour correspondre à la paroi de séparation centrale (131a).

5. Echangeur de chaleur (100) selon la revendication 1, comprenant en outre:
une paroi de séparation de réservoir (111d) pour diviser l'intérieur du premier réservoir en une première partie (120d) et une seconde partie par rapport à une direction de l'écoulement vers l'extérieur du fluide ; et
des parois de séparation de tube (121a) disposées dans les tubes intermédiaires (111) au moins autre que les tubes qui sont disposés aux extrémités pour diviser les tubes intermédiaires respectifs (111) en premiers passages (111e) et seconds passages (111f) par rapport à la direction de l'écoulement du fluide extérieur,
dans lequel lorsque le fluide intérieur change pour la dernière fois de direction, le fluide intérieur s'écoule des seconds passages (111f) dans les premiers passages (111e).

6. Echangeur de chaleur (100) selon la revendication 5,
dans lequel les premiers passages (111e) communiquent avec la première partie (120d) du premier réservoir.

7. Echangeur de chaleur (100) selon la revendication 1 ou 5,
dans lequel le second réservoir auquel le fluide intérieur change la direction de l'écoulement en dernier inclut une paroi de séparation centrale (131a), et la paroi de séparation centrale (131a) est disposée au niveau d'une position du milieu pour diviser le second réservoir par rapport à la direction longitudinale.

8. Echangeur de chaleur (100) selon l'une quelconque des revendications 1 à 7,
dans lequel le fluide extérieur est de l'air et est chauffé par le fluide intérieur tout en passant entre les tubes (111).

9. Climatiseur d'air pour un véhicule ayant un échangeur de chaleur (100) selon l'une quelconque des revendications 1 à 8,
dans lequel l'échangeur de chaleur (100) est installé de sorte que les tubes (111) sont agencés dans une direction droite et gauche du véhicule de sorte que le fluide extérieur passant à travers une région de moitié gauche de l'échangeur de chaleur (10) échange la chaleur avec le fluide intérieur passant dans les tubes de moitié gauche (111), et le fluide extérieur passant à travers une région de moitié droite de l'échangeur de chaleur (100) échange la chaleur avec le fluide intérieur passant dans les tubes de moitié droite (111).
